# EUROPÄISCHE PATENTSCHRIFT

(11) **EP 1 186 225 B1**
(45) Veröffentlichungstag und Bekanntmachung des Hinweises auf die Patenterteilung: **12.12.2007**
(21) Anmeldenummer: 01119410.7
(22) Anmeldetag: 11.08.2001
(51) Int. Cl.: A01F 15/07

(54) **Kombination aus einer Presse, einem Wickelgerät und einem diese aufnehmenden Fahrgestell**
Combination of a baller, a wrapper and a chassis for attaching both elements
Combinaison d'une presse, une enrubanneuse, et un châssis pour l'attachement des deux éléments

(30) Priorität: 07.09.2000 DE 10044166
(43) Veröffentlichungstag der Anmeldung: 13.03.2002
(73) Patentinhaber: DEERE & COMPANY, Moline, Illinois 61265-8098 (US)
(72) Erfinder: Roth, Arsène, 70100 Gray (FR); Viaud, Jean, 70100 Gray (FR)
(74) Vertreter: Magin, Ludwig Bernhard

(56) Entgegenhaltungen:
- DE-A- 19 544 109
- DE-U- 20 005 963
- GB-A- 960 626
- US-A- 4 669 257
- US-A- 4 730 446
- US-A- 5 822 967

## Beschreibung

Die Erfindung betrifft eine Kombination aus einer Presse, einem Wickelgerät und einem diese aufnehmenden Fahrgestell.

Die EP-A1-865 723 offenbart eine Pressen-Wickler-Kombination, bei der ein Fahrgestell vorgesehen ist, in das eine Presse eingebaut und auf das ein Ballenwickler aufgesetzt ist. Das Fahrgestell umgibt mit einem Rahmen seitlich die Presse und das Wickelgerät.

Die DE-A1-41 20 733 zeigt bereits eine Kombination einer Presse mit einem Wickelgerät und einem Fahrgestell, bei der zwei Räder in der Art einer Tandemachse nahe beieinander vorgesehen sind. Die dort gezeigte Verbindung der Presse mit einem Fahrgestell läßt offen, wie in einem tatsächlichen Ausführungsbeispiel die Kräfte beherrscht werden könnten.

Das der Erfindung zugrunde liegende Problem wird in der erheblichen Breite und dem erheblichen Gewicht des Gesamtgeräts bzw. in der unklaren technischen Ausführung gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise bedarf es keines eigenen selbsttragenden Rahmens, um die Kombination aus einer Presse und einem Wickelgerät fahrbar zu machen, sondern es wird die Anschlußmöglichkeit der Presse an eine üblicherweise vorhandene Tragachse ausgenutzt, um den Anschluß zu dem Fahrgestell herzustellen, und die Biegekräfte in der Verbindung werden durch die Verwendung einer Strebe aufgefangen. Somit können die von einer ohnehin vorhandenen Deichsel in die Presse eingeleiteten Kräfte problemlos auf das Fahrgestell übertragen werden. Eines Umbaus der Presse, jedenfalls eines wesentlichen Umbaus, bedarf es mithin nicht; insbesondere muß die Presse nicht mit einem eigenen Anschlußrahmen versehen werden.

Bei einer als Rundballenpresse ausgebildeten Presse treten große Kräfte in dem Lagerbereich auf, in dem ein Entladegatter - der rückwärtige Rahmenteil - an dem feststehenden Gehäuse - der vordere Rahmenteil - vertikal schwenkbar angreift. Es werden somit Biegemomente gering gehalten, wenn die Strebe in diesem Bereich an der Presse angreift.

Die Strebe kann die Biegemomente der Presse um ihren unteren Anschlußbereich am besten auffangen, wenn sie gerade ausgebildet ist und somit die geringste Tendenz aufweist, seitlich auszulenken.

Das Wickelgerät, bzw. dessen Wickelarm kann relativ weit oben angebracht und dennoch genügend seitlichen Freiraum aufweisen, wenn es ebenfalls an einer Strebe angebracht ist.

Die Kombination erfährt eine ausreichende Steifigkeit bei geringen Materialstärken, wenn die Streben mittels einer Spange untereinander verbunden sind und sich somit gegenseitig halten. Die Spange kann ein Zuganker in der Art einer Stange, Kette, oder dergleichen sein.

Um Fertigungskosten zu sparen greifen die Streben in einer gemeinsamen Konsole an dem Fahrgestell an.

Mit der Hilfe einer weiteren Strebe ist es möglich, für eine derartige Kombination erforderliche Einzelteile, wie Kabel, Leitungen, Schutze etc. festzulegen.

Die Ausbildung bzw. Anordnung der Streben und der Spange als Fachwerk führt zu einem stabilen Aufbau mit leicht beherrschbaren Zug- und Druckkräften und geringen Biegekräften.

Die Verwendung einer pendelnden Tandemachse macht es möglich, ein großes Gewicht bei geringer Bodenverdichtung zu tragen und die Kombination vertikal schwenkbar über Bodenunebenheiten zu fahren, ohne daß es zu Kraftspitzen an der Ankuppelstelle des Zugfahrzeugs kommt.

Eine problemlose Übergabe eines in der Presse gebildeten Ballens an das Wickelgerät wird durch die Verwendung eines Förderers zwischen diesen erreicht, wie er z. B. aus der DE 41 20 733 bekannt ist.

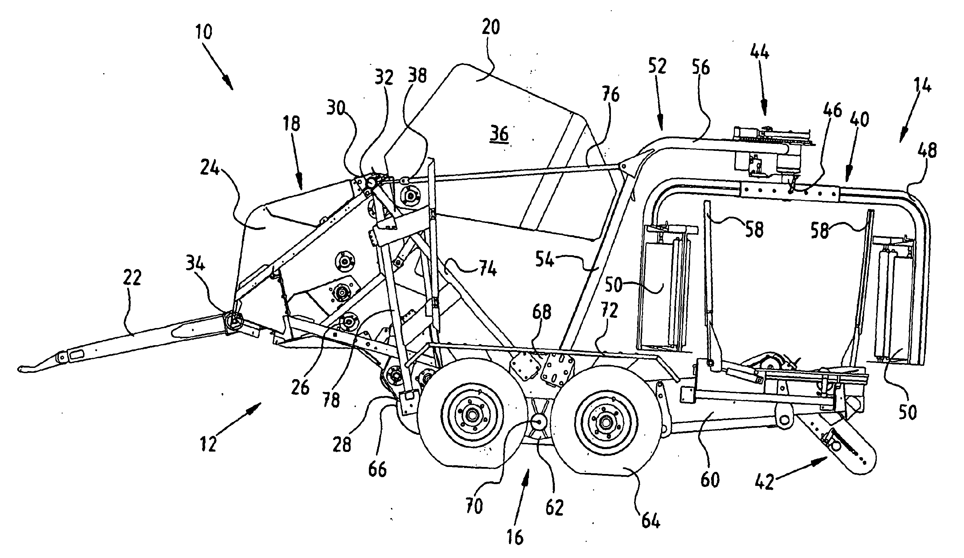

In der Zeichnung ist ein nachfolgend näher beschriebenes Ausführungsbeispiel der Erfindung dargestellt. Die einzige Figur der Zeichnung zeigt eine Kombination aus einer Presse, einem Wickelgerät und einem Fahrgestell in Seitenansicht.

Eine in der Zeichnung gezeigte Kombination 10 enthält im wesentlichen eine Presse 12, ein Wickelgerät 14 und ein Fahrgestell 16.

Die Kombination 10 wird auch als Pressen-Wickel-Kombination bezeichnet, die von einem nicht gezeigten Ackerschlepper über ein Feld gezogen wird, Erntegut, z. B. Silagegras, aufnimmt, dieses zu einem Ballen preßt und schließlich luftdicht einwickelt.

Die Presse 12 ist in dem dargestellten Ausführungsbeispiel als eine Rundballenpresse ausgebildet, was jedoch nicht zwingend ist. Statt dessen könnte auch eine Rechteck- oder eine Hochdruckballenpresse verwendet werden. Bei der Presse 12 handelt es sich um eine handelsübliche Presse 12, wie sie z. B. unter der Bezeichnung JOHN DEERE 575 erhältlich ist. In dem handelsüblichen Zustand ist die Presse 12 in ihrem unteren Bereich mit einer nicht gezeigten Tragachse versehen, auf der sie transportiert werden kann. Aufgrund der Verbindung der Presse 12 mit dem Fahrgestell 16 entfällt die Tragachse; allerdings bleibt sie weiterhin für eine Verbindung mit einer solchen Tragachse geeignet und kann aus der Kombination herausgelöst und unabhängig von dem Wickelgerät 14 betrieben werden.

Die Presse 12 enthält unter anderem einen Vorderteil 18, einen rückwärtigen Teil 20 und eine Deichsel 22.

Der Vorderteil 18 weist Seitenwände 24 auf, zwischen denen sich auf einem Kreisbogen gelegene Rollen 26 erstrecken, um eine nicht ersichtliche Ballenbildungskammer teilumfangsseitig zu umgeben. In einem vorderen unteren Bereich des Vorderteils 18 ist Raum für eine nicht gezeigte Gutaufnahmevorrichtung geschaffen, wie dies an sich bekannt ist. Im unteren Bereich des Vorderteils 18 ist ein Flansch 28 vorgesehen, der bei einer Presse 12 des Typs JOHN DEERE 575 dem Anschluß einer Tragachse dient. An anderen handelsüblichen Pressen mag ein solcher bereits vorhandener Flansch durchaus einem anderen Zweck dienen. Dieser Flansch 28 ist fest mit den Seitenwänden 24 und einer nicht gezeigten Spange zwischen diesen verbunden und somit geeignet, hohe Kräfte zu übertragen. In einem oberen Bereich sind die Seitenwände 24 mittels einer Spange 30 starr verbunden, die an den Außenseiten der Seitenwände 24 jeweils ein Rohr 32 trägt. Dieses Rohr 32 dient außer dem weiter unten erläuterten Zweck auch der leichteren Transportierbarkeit während der Fertigung und ist somit bereits bei einer herkömmlichen Presse 12 vorhanden. Schließlich erstreckt sich zwischen den Seitenwänden 24 in deren vorderen Bereich eine Spange 34, an die die Deichsel 22 angeschlossen ist. Die Beschreibung des Vorderteils 18 wird hier beendet, weil die übrigen Einzelteile bekannt und für die Erfindung nicht ausschlaggebend sind.

Der rückwärtige Teil 20 wird zuweilen auch als ein Ballenentladegatter bezeichnet und ist in bekannter Weise ausgeführt. Der rückwärtige Teil 20 weist Seitenwände 36 auf, zwischen denen sich ebenfalls auf einem Kreisbogen gelegene nicht näher gezeichnete Rollen erstrecken, um die Ballenbildungskammer auf dem verbleibenden Umfangsbereich zu umfassen. Weiterhin befinden sich zwischen den Seitenwänden 36 nicht gezeigte und in üblicher Weise ausgebildete Spangen, um den rückwärtigen Teil 20 zu einem festen Rahmen zusammenzuhalten. Der Vorderteil 18 und der rückwärtige Teil 20 sind in einem Schwenklager 38 miteinander verbunden, das sich in dem rückwärtigen oberen Eckbereich des Vorderteils 18 und in dem vorderen oberen Eckbereich des rückwärtigen Teils 20 befindet und eine vertikale Schwenkbewegung des rückwärtigen Teils 20 zuläßt, die von nicht gezeigten Hydraulikzylindern eingeleitet wird.

Die Deichsel 22 ist an die Spange 34 vertikal starr, meist aber einstellbar, angeschlossen und dient dem Anschluß normalerweise der Presse 12, in diesem Fall aber der gesamten Kombination 10, an ein nicht dargestelltes Zugfahrzeug, z. B. einen Ackerschlepper. Aufgrund der starren Verbindung zwischen der Deichsel 22 und dem Vorderteil 18 wird jede Vertikalbewegung der Deichsel 22 auch in den Vorderteil 18 eingeleitet.

Das Wickelgerät 14 weist im wesentlichen zwei Komponenten auf, nämlich einen Wickelarm 40 und einen Wickeltisch 42.

Wickelgeräte 14 der dargestellten Art sind auf dem Markt weit bekannt und haben die Aufgabe, einen in der Presse 12 gebildeten Ballen mit einer Folie luftdicht zu umhüllen, so daß Silagefutter gewonnen werden kann.

Der Wickelarm 40 enthält einen Antrieb 44, z. B. mit einem nicht näher gezeigten Motor und Getriebe, mit einer vertikalen Abtriebswelle 46. Des weiteren gehört zu dem Wickelarm 40 ein Wickelrotor 48 in der Form eines auf dem Kopf stehenden "U", an dessen vertikale Schenkel jeweils ein Folienspender 50 angebracht ist. Der Wickelrotor 48 ist zentrisch mit der Abtriebswelle 46 verbunden und wird von dem Antrieb 44 um deren Mittenachse gedreht, wobei in dem freien Innenraum der Ballen auf dem Wickeltisch 42 lagert und von diesem um eine horizontale Achse gedreht wird, wie diese bekannt ist. Der Wickelarm 40 hängt an einer Strebe 52, die einem auf dem Kopf stehenden "J" ähnlich ist und einen hauptsächlich vertikalen Schenkel 54 und einen hauptsächlich horizontalen Schenkel 56 enthält, die einen stumpfen Winkel von ca. 110 Grad zwischen sich einschließen. Der vertikale Schenkel 54 erstreckt sich soweit, daß der Wickelrotor 48 frei oberhalb des Fahrgestells 16 drehen kann, und der horizontale Schenkel 56 ist länger als der Radius des Wickelrotors 48, so daß der Wickelrotor 48 bei seiner Drehbewegung nicht an dem vertikalen Schenkel 54 anschlägt.

Der Wickeltisch 42 ist in nicht drehender Bauweise ausgeführt und enthält in dem vorderen und dem rückwärtigen Endbereich jeweils eine nicht gezeigte Walze, um die ebenfalls nicht gezeigte durchhängende Riemen geschlungen sind, um auf den oberen Trumen einen Ballen aufzunehmen und in Drehung zu versetzen. Der Wickeltisch 42 ist in nicht gezeigten Schienen mit einem U-Profil entlang des Fahrgestells 16 beweglich gelagert. Mit Hilfe eines nicht gezeigten Hydraulikmotors kann der Wickeltisch 42 zur Aufnahme eines Ballens unter den rückwärtigen Teil 20 gefahren werden und dann mit dem Ballen mittig unter den Wickelarm 40 gebracht werden, wo er in Drehung versetzt von den Folienspendern 50 umkreist wird. Schließlich wird er wie in der Zeichnung dargestellt nach hinten abgekippt und legt den umwickelten Ballen auf den Boden ab, wie dies ebenfalls bekannt ist. Schließlich sind zwischen den Folienspendern 50 und dem Wickeltisch 42 Folienhalter 58 vorgesehen, die die Folie zu Beginn des Wickelvorgangs halten und an dessen Ende trennen.

Das Fahrgestell 16 enthält zwei zueinander parallel verlaufende Wangen 60, zwei Tandemachsträger 62 und auf jeder Seite zwei Räder 64.

Das Fahrgestell 16 nimmt an seinem vorderen Endbereich die Presse 12 und an seinem rückwärtigen Endbereich das Wickelgerät 14 auf. Dabei ist die Schwenkachse des Tandemachsträgers 62 an den Wangen 60 derart gewählt, daß die Gewichtskräfte vorne und hinten auch dann noch handhabbar sind, wenn sich der Ballen in der Presse 12 bzw. dem Wickelgerät 14 befindet, was einer Gewichtsverlagerung von bis zu 1.200 Kg gleichkommt.

Die Wangen 60 sind aus Rechteckrohren, aus U-Profil, aus C-Profil oder dergleichen gebildet und mittels nicht ersichtlicher Querspangen starr miteinander verbunden. An ihrer Oberseite sind an den vorderen Endbereichen Flansche 66 vorgesehen, die mit den Flanschen 28 zusammenpassen und verschraubt werden können. Auf diese Weise wird die Presse 12 primär auf dem Fahrgestell 16 befestigt und gesichert. Auf der Innenseite der Wangen 60 sind die zuvor genannten Schienen mit U-Profil angebracht, in denen der Wickeltisch 42 längs der Kombination 10 bewegt wird. An der Außenseite der Wangen 60 sind Konsolen 68 starr und die Tandemachsträger 62 vertikal schwenkbar in jeweils einem Lager 70 angebracht. Die Anbringung der Konsole 68 erfolgt mit einem horizontalen Abstand zu den Flanschen 28, 66. Aufgrund der Verbindung des Fahrgestells 16 mit der Presse 12 über die Flansche 28, 66 befinden sich die Wangen 60 unterhalb der Presse 12, was zu einer schmalen Bauweise führt. Schließlich ist an die Außenseite jeder Wange 60 in diesem Ausführungsbeispiel ein Kotflügel 72 angebracht. Selbstverständlich sind an dem Fahrgestell 16 auch Bremsen, Beleuchtung, Federung und dergleichen vorgesehen, was jedoch selbstverständlich ist und daher nicht näher beschrieben werden muß.

Jeder Tandemachsträger 62 ist in der Form einer Platte ausgebildet, die mittig oder im wesentlichen mittig auf dem Lager 70 schwenkbar aufgenommen ist und in ihren Endbereichen jeweils ein Rad 64 drehbar trägt.

Die Räder 64 weisen einen geringen Abstand zueinander auf, stützen die Kombination 10 auf dem Boden ab und sorgen für einen geringen Abstand zwischen der Unterseite der Wangen 60, als dem tiefsten Punkt der Kombination 10, und dem Boden.

Zur Verbindung der Presse 12 und des Wickelgeräts 14 mit dem Fahrgestell 16 sind eine erste Strebe 74 und eine Spange 76 vorgesehen.

Die erste Strebe 74 erstreckt sich zwischen dem Rohr 32 im oberen rückwärtigen Eckbereich des Vorderteils 18 und der Konsole 68 und divergiert von einer gedachten Linie zwischen dem Rohr 32 und den Flanschen 28, 66, um einen Teil eines Dreiecks zu bilden. Die erste Strebe 74 ist als ein gerades Rohr ausgebildet, das sowohl auf Zug, wie auch auf Druck beanspruchbar ist und aufgrund seiner geraden Ausbildung nicht auszuknicken droht. Zwischen der Konsole 68, dem Rohr 32 und den Flanschen 28, 66 ergibt sich ein stabiles Dreieck, das die Presse 12 gegen eine Kippbewegung in der Fahrtrichtungsebene sichert. Die Befestigung der ersten Strebe 74 an der Konsole 68 erfolgt mittels Schellen, Klemmbügeln, Schraubverbindungen oder dergleichen.

Die Spange 76 erstreckt sich zwischen der ersten Strebe 74 und der Strebe 52, die ausweislich der Zeichnung im wesentlichen ein "V" bilden und somit jeweils auseinander zu driften drohen. Die Spange 76 greift einerseits an dem Rohr 32 und anderseits in dem Übergangsbereich zwischen dem vertikalen und dem horizontalen Schenkel 54 und 56 an, die jeweils die höchstgelegenen Stellen markieren. Die Spange 76 kann mit einer Spannschraube versehen werden, die es erlaubt, die Länge einzustellen. In anderen Ausführungsbeispielen könnte die Spange 76 auch an einer anderen Stelle angreifen, solange gewährleistet ist, daß sie die Kräfte übertragen kann.

Endlich ist eine dritte Strebe 78 vorgesehen, die sich zwischen dem Rohr 32 und dem Bereich der Flansche 28, 66 erstreckt. Diese Strebe 78 dient jedoch nicht der Festlegung der Presse 12 auf dem Fahrgestell 16 sondern dem Anbau von Ausrüstungsteilen der Presse 12 bzw. der Kombination 10, wie Schmierleitungen, Schutzen, Elektroleitungen, Hydraulikleitungen und dergl.

Aus der vorangegangenen Beschreibung geht hervor, daß die Linie zwischen den Flanschen 28, 66 und dem Rohr 32, die erste Strebe 74, die Spange 76 und die Strebe 52 eine Art Fachwerk bilden, das in sich stabil ist.

Die erste Strebe 74 macht es möglich, die von der Deichsel 22 eingeleiteten vertikalen Kräfte ohne übermäßige Belastung der Flansche 28, 66 in das Fahrgestell 16 einzuleiten. Eine weitere Vermeidung von übermäßigen Kräften wird durch die vertikal schwenkbare Anbringung der Wangen 60 an den Tandemachsträgern 62 und die vorteilhafte Gewichtsverteilung der Kombination 10 vor und hinter den Lagern 70 erreicht.

Die obige Beschreibung des Ausführungsbeispiels geht davon aus, daß die Wangen 60, die Streben 54, 74 und 78 und die Spangen 76 auf jeder Seite der Kombination, d.h. doppelt vorgesehen ist, was jedoch nicht für alle diese Teile so sein muß.

Insgesamt ergibt sich gegenüber dem Stand der Technik eine leichtere und schmalere Bauweise, die es vermeidet, die Presse 12 mit Zusatzrahmen zu versehen oder besonders auszubilden.

## Patentansprüche

1. Kombination (10) aus einer Presse (12), einem Wickelgerät (14) und einem diese aufnehmenden Fahrgestell (16), wobei die Presse (12) einen der Verbindung mit einer Tragachse dienlichen unteren Bereich und eine Deichsel (22) und das Fahrgestell (16) eigene Räder (64) aufweist, **dadurch gekennzeichnet, daß** die Presse (12) in dem der Verbindung mit einer Tragachse dienlichen unteren Bereich mit dem Fahrgestell (16) verbunden und in einem oberen Bereich mittels wenigstens einer Strebe (74) an dem Fahrgestell (16) abgestützt ist.

2. Kombination nach Anspruch 1, **dadurch gekennzeichnet, daß** die Strebe (74) mit ihrem oberen Endbereich im Bereich der Verbindungsstelle zwischen einem vorderen und einem rückwärtigen Teil (18, 20) der Presse (12) angreift.

3. Kombination nach Anspruch 1 oder 2, **dadurch gekennzeichnet, daß** die Strebe (74) gerade ausgebildet ist.

4. Kombination nach einem oder mehreren der vorherigen Ansprüche, **dadurch gekennzeichnet, daß** das Wickelgerät (14) an wenigstens einer zweiten Strebe (52) angebracht ist.

5. Kombination nach einem oder mehreren der vorherigen Ansprüche, **dadurch gekennzeichnet, daß** die Streben (52, 74) mittels einer Spange (76) miteinander verbunden sind.

6. Kombination nach einem oder mehreren der vorherigen Ansprüche, **dadurch gekennzeichnet, daß** die Streben (52, 74) in einer gemeinsamen Konsole (62) an dem Fahrgestell (16) angreifen.

7. Kombination nach einem oder mehreren der vorherigen Ansprüche, **dadurch gekennzeichnet, daß** zwischen dem Fahrgestell (16) und dem Angriffspunkt der ersten Strebe (74) an der Presse (12) eine dritte Strebe (78) vorgesehen ist.

8. Kombination nach einem oder mehreren der vorherigen Ansprüche, **dadurch gekennzeichnet, daß** die Streben (52, 74, 78) und die Spange (76) in der Art eines Fachwerks aufgebaut sind.

9. Kombination nach einem oder mehreren der vorherigen Ansprüche, **dadurch gekennzeichnet, daß** das Fahrgestell (16) eine pendelnde Tandemachse aufweist.

10. Kombination nach einem oder mehreren der vorherigen Ansprüche, **dadurch gekennzeichnet, daß** zwischen der Presse (12) und dem Wickelgerät (14) ein Förderer vorgesehen oder das Wickelgerät (14) mit einem als Förderer ausgebildeten Wickeltisch (42) versehen ist.

## Claims

1. Combination (10) of a press (12), a winding apparatus (14) and a chassis (16) accommodating the latter, wherein the press (12) has a lower region, suitable for connection to a supporting axle, and a drawbar (22), and the chassis (16) has its own wheels (64), **characterized in that** the press (12), in the lower region suitable for connection to a supporting axle, is connected to the chassis (16) and, in an upper region, is supported on the chassis (16) by means of at least one strut (74).

2. Combination according to Claim 1, **characterized in that** the strut (74) engages with its upper end region in the joint between a front and a rear part (18, 20) of the press (12).

3. Combination according to Claim 1 or 2, **characterized in that** the strut (74) is of straight configuration.

4. Combination according to one or more of the previous claims, **characterized in that** the winding apparatus (14) is attached to at least a second strut (52).

5. Combination according to one or more of the previous claims, **characterized in that** the struts (52, 74) are connected to one another by means of a cross-brace (76).

6. Combination according to one or more of the previous claims, **characterized in that** the struts (52, 74) engages in a joint bracket (62) on the chassis (16).

7. Combination according to one or more of the previous claims, **characterized in that** between the chassis 16) and the contact point of the first strut (74) on the press (12) a third strut (78) is provided.

8. Combination according to one or more of the previous claims, **characterized in that** the struts (52, 74, 78) and the cross-brace (76) are structured in the style of a latticework.

9. Combination according to one or more of the previous claims, **characterized in that** the chassis (16) has a floating tandem axle.

10. Combination according to one or more of the previous claims, **characterized in that** between the press (12) and the winding apparatus (14) a conveyor is provided, or the winding apparatus (14) is provided with a winding table (42) configured as a conveyor.

## Revendications

1. Combinaison (10) formée par une presse (12), un dispositif d'enrubannage (14) et un châssis de roulement (16) destiné à recevoir ceux-ci, la presse (12) comportant une partie inférieure, utilisée pour l'assemblage avec un axe de support, et une barre d'attelage (22), et le châssis de roulement (16) comportant ses propres roues (64), **caractérisée en ce que** la presse (12) est assemblée au châssis de roulement (16) dans la partie inférieure, utilisée pour l'assemblage à un axe de support, et est en appui sur le châssis de roulement (16) au moyen d'au moins une entretoise (74) dans une partie supérieure.

2. Combinaison selon la revendication 1, **caractérisée en ce que** l'entretoise (74) est attachée avec sa zone d'extrémité supérieure dans la zone de liaison entre une partie avant et une partie arrière (18, 20) de la presse (12).

3. Combinaison selon la revendication 1 ou 2, **caractérisée en ce que** l'entretoise (74) est droite.

4. Combinaison selon une ou plusieurs des revendications précédentes, **caractérisée en ce que** le dispositif d'enrubannage (14) est monté contre au moins une deuxième entretoise (52).

5. Combinaison selon une ou plusieurs des revendications précédentes, **caractérisée en ce que** les entretoises (52, 74) sont reliées l'une à l'autre au moyen d'un tendeur (76).

6. Combinaison selon une ou plusieurs des revendications précédentes, **caractérisée en ce que** les entretoises (52, 74) sont attachées au châssis de roulement (16) dans une console (62) commune.

7. Combinaison selon une ou plusieurs des revendications précédentes, **caractérisée en ce qu'**il est prévu une troisième entretoise (78) sur la presse (12) entre le châssis de roulement (16) et le point d'attache de la première entretoise (74).

8. Combinaison selon une ou plusieurs des revendications précédentes, **caractérisée en ce que** les entretoises (52, 74, 78) et le tendeur (76) sont montées à la manière d'un treillis.

9. Combinaison selon une ou plusieurs des revendications précédentes, **caractérisée en ce que** le châssis de roulement (16) comporte un essieu tandem oscillant.

10. Combinaison selon une ou plusieurs des revendications précédentes, **caractérisée en ce qu'**il est prévu un convoyeur entre la presse (12) et le dispositif d'enrubannage (14) ou le dispositif d'enrubannage (14) est muni d'une table d'enrubannage (42) réalisée sous forme de table de transport.
